# EUROPEAN PATENT APPLICATION

(11) **EP 2 759 507 A1**
(43) Date of publication of application: **30.07.2014**
(21) Application number: 13152561.0
(22) Date of filing: 24.01.2013
(51) Int. Cl.: B66B 15/04, B66D 5/14, F16D 65/00, F16D 65/12

(54) **Elevator motor**

(71) Applicant: Kone Corporation, 00330 Helsinki (FI)
(72) Inventor: Lehtinen, Hannu, 04660 Numminen (FI); Virnes, Mika, 05800 Hyvinkää (FI); Luukkonen, Perttu, 05880 Hyvinkää (FI); Korhonen, Tuukka, 00320 Helsinki (FI); Simbierowicz, Gabriela, 05830 Hyvinkää (FI)
(74) Representative: Graf Glück Kritzenberger

(57) **Abstract**

The invention relates to an elevator motor comprising a rotor (10) with a rotor body (12) carrying a traction sheave (14) as well as a brake surface configured to be gripped by a motor brake. According to the invention the brake surface of the rotor is provided on a separate brake element (18) which is separated from the rotor body (12), and that the brake element is connected to the rotor body only via spaced apart connections (20). This solution leads to a reduced noise propagation of the elevator rotor.

## Description

The present invention relates to an elevator motor having a rotor with a rotor body supporting a traction sheave for co-action with a suspension member, as e.g. hoisting ropes or belts. Further, the rotor body supports a brake surface configured to be gripped by a motor brake provided in connection with the motor.

Normally, the brake surface is provided on a ring like brake plate extending from a rim of the rotor body radially outwards. One or two brakes are provided with the motor which grip the brake plate as soon as the brakes are de-energized. The disadvantage of this well operating and reliable arrangement is that the rotor has a comparably large area and thus creates not inessential noise due to the natural frequency of the system and the vibrations caused by rotor rotation and by electromagnetic excitations taking place in the motor.

It is therefore object of the present invention to provide an elevator motor which propagates less noise than known solutions.

The object of the invention is solved with an elevator motor according to claim 1. Preferred embodiments of the invention are subject-matter of the dependent claims. Inventive embodiments are also presented in the description part of the present application. The inventive content may also consist of several separate inventions, especially if the invention is considered in the light of explicit or implicit sub-tasks or in respect of advantages or sets of advantages achieved. In this case, some of the attributes contained in the claims below may be superfluous from the point of view of separate inventive concepts. Within the framework of the basic concept of the invention, features of different embodiments of the invention can be applied in conjunction with other embodiments.

The base idea of the invention refers to an elevator motor of the above mentioned type, i.e. to an elevator motor comprising a rotor with a rotor body supporting a traction sheave as well as a brake surface configured to be gripped by a motor brake. The motor brake is usually provided in connection with the elevator motor but can also be provided as separate structure adjacent to the motor. It is also possible to provide several brakes for one motor. According to the invention the brake surface of the rotor is provided on a separate brake element, separated from the rotor body, which brake element is connected with the rotor body only via spaced apart connections.

By the fact that the brake element is a separate part which is only connected at spaced apart connections to the rotor body, the brake element together with the brake surface forms a separate part which does not transfer and propagate the noise propagated from the rotor body. Furthermore, the brake element has its own natural (resonance) frequency which is different from the natural frequency of the rotor body. By the fact that the rotor body does not comprise the brake element any longer as an integrated (e.g. one-piece) part, its mass and area are reduced, which also leads to a reduction of the noise propagation of the rotor body. By the fact that the brake element is connected to the rotor only via the spaced apart connections, the brake element is acoustically decoupled from the rotor of the elevator motor.

The connections may be implemented by any connection technology known in the art, e.g. welding or gluing spots, bolts, rivets or any other friction- or form-fitting connections.

The connections of the brake element to the rotor may be preferably configured in such a way that between the connections there is a small gap between the rotor and the brake element which gap leads to acoustic decoupling of the brake element from the rotor body. Although a solution where the brake element and the rotor are continuously in touch may also provide sufficient acoustic decoupling this preferred solution provides an improved acoustical decoupling of the brake element from the rotor.

If a gap is provided between the brake element and the rotor, this gap is preferably filled with a noise insulating material as e.g. plastics or rubber. This solution has the advantage that the gap cannot be filled with dirt during the use of the elevator motor and that on the other hand the noise insulation between rotor and brake element keeps maintained although the gap between them is closed.

Preferably, the connections between the brake element and the rotor are form-fit connections. Such form-fit connections which are for example rivets or bolts clearly fix the brake element to the rotor body in a desired position. These connections are furthermore reliable and do not tend to break.

Preferably, the brake element is made from another material than the rotor body so that the differences in the natural frequencies of these two parts are furthermore increased. The more different the natural frequencies of the brake element and the rotor are the better the noise propagation via the complete arrangement is reduced as the natural frequencies of both parts do not tend to sum up.

Preferably, the brake element is a ring like structure, preferably a ring like brake plate. This kind of providing the braking surface is commonly and reliably used in elevator motors.

In a preferred embodiment of the invention, the brake element is connected via the connections to an outer rim of the rotor. In this solution, the brake element extends outwardly of the rotor rim and therefore has a very good lever force if gripped by a motor brake.

It is clear that preferably the connections are uniformly distributed along the circumference of the rotor so that the connection of the brake element to the rotor body is uniform along the whole 360° circle of the rotor.

In a preferred embodiment of the invention, the connections are sockets or rivets which are provided parallel to the rotor axis and which comprise cylindrical parts arranged parallel to the rotor axis which protrude in corresponding complementary recesses provided in the rotor as well as in the brake element. Such a connection is at one hand easy to make and on the other hand fixes the brake element reliably and secure to the rotor body with a minimum of noise propagation from the rotor body to the brake element.

Preferably, the rotor body is made of cast iron which is a preferred material for building rotors, particularly for permanent magnet motors, and the brake element is made of steel. This embodiment has the advantage that the material of the brake element can be designed particularly for its task as a braking element. Therefore, this solution allows the optimal configuration of the rotor body and of the brake element for their specific functions and on the other hand provides different natural frequencies which again reduces the noise propagation of the elevator motor in total.

Preferably, the invention can be applied in permanent magnet motors or outer rotor motors as these motors favor an arrangement where an outer rim of the rotor body carries the brake surface.

The above-mentioned embodiments may be combined with each other arbitrarily.

The invention is now described by an example with the aid of the schematic drawings. In these drawings
Fig. 1 shows a perspective view of a rotor of an elevator rotor, and
Fig. 2 shows a front view on a sector of the elevator rotor shown in Fig. 1.

In this connection it has to be carried out that the figures show only those parts of the elevator motor which are challenged by the invention, i.e. the rotor. The other parts of the elevator motor which remain unchanged as the stator of the elevator motor as well as the motor brakes are not shown for clarity reasons.

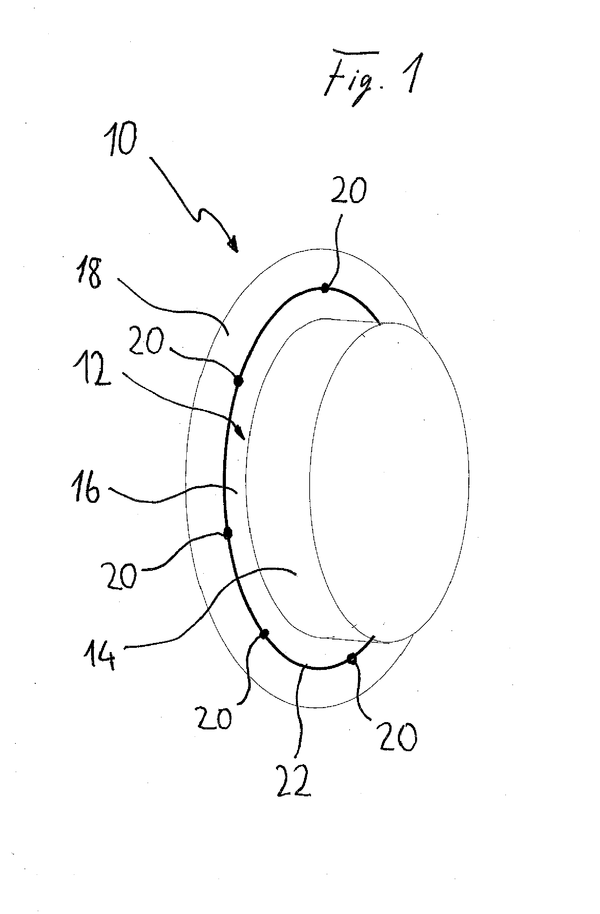

Fig. 1 shows a rotor 10 of an elevator motor. The rotor 10 has a rotor body 12 comprising a traction sheave 14, preferably as a one-piece part. The traction sheave 14 has rope grooves or corresponding friction surfaces for suspension members as e.g. elevator ropes or belts on its circumference. These are not shown for clarity reasons.

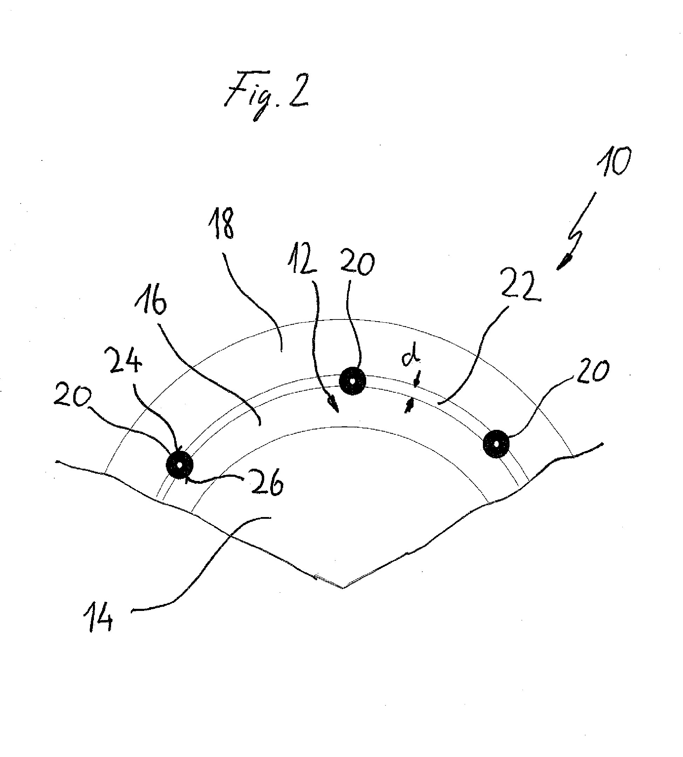

Furthermore, the rotor body 12 has a rim 16 extending outwardly to which rim 16 a ring like brake plate 18 is connected via connections 20. The brake plate 18 is fixed to the rotor 12 only via the connections 20, which, as it is shown in detail in Fig. 2, are cylindrical sockets or rivets with a cylindrical axis parallel to the rotor axis. Between the sockets or rivets 20, a gap 22 with a width d is provided. By this arrangement, the brake plate 18 is connected to the rim 16 of the rotor 12 only with the sockets or rivets 20. The sockets or rivets 20 fit into recesses 24 in the brake plate as well as into recesses 26 comprised in the rim 16 of the rotor 12. Via the interaction of the sockets or rivets with these recesses 24, 26, a form-fit is obtained which reliably fixes the ring like brake plate 18 to the rotor body 12. Via this arrangement, the brake plate 18 is supported by the rotor body 12 but is provided as a separate element which is acoustically decoupled from the rotor body 12 which leads to a clear reduction of the noise propagation.

Preferably, between six and ten sockets or rivets 20 are arranged uniformly along the complete circumference of the elevator rotor 12 to securely fix the brake plate 18 to the rim 16 of the rotor.

The invention can also be realized with modifications of the above embodiments. For example, instead of sockets or rivets, bolts or welding points may be used to connect the brake plate 18 to the rotor body 12. Furthermore, the connections may have a different geometry than that shown in the drawings. Preferably, the thickness d of the gap 22 may vary between 1 mm and 10 mm, but may also have other width values. Preferably, the gap may be filled with noise insulating material as to avoid the danger of dirt being trapped in that gap 22.

Furthermore several brake elements may be provided together with the rotor body 12, e.g. two ring like brake plates arranged spaced apart but concentrically. Furthermore, the brake element may have another geometry than being a ring like plate as shown in Figs. 1 and 2. Accordingly, the brake element may also be a drum like extension protruding axially.

Various modifications of the invention are possible within the framework of the appended patent claims. Thus other material pairings for the rotor body and the brake element may be used than those mentioned above, e.g. comprising other metals, alloys, plastics and fiber-materials.

The gap with may have other values than those mentioned above, e.g. between 0,5 mm and 30 mm. The most preferred values will be chosen by the skilled person based on the elevator layout in question.

## Claims

1. Elevator motor comprising a rotor (10) with a rotor body (12) carrying a traction sheave (14) as well as a brake surface configured to be gripped by a motor brake, **characterized in that** the brake surface of the rotor is provided on a separate brake element (18) which is separated from the rotor body (12), and that the brake element is connected to the rotor body only via spaced apart connections (20).

2. Elevator motor according to claim 1, wherein a gap (22) is provided between the rotor body (12) and the brake element (18).

3. Elevator motor according to claim 2, wherein the gap (22) is filled with a noise insulating material.

4. Elevator motor according to claim 2 or 3, wherein the gap (22) has a width of 1 mm to 10 mm.

5. Elevator motor according to one of the preceding claims, wherein the connections (20) are form-fit.

6. Elevator motor according to one of the preceding claims, wherein the brake element (18) is a ring like brake plate.

7. Elevator motor according to claim 6, wherein the brake element (18) is connected via the connections (20) to an outer rim (16) of the rotor body (12).

8. Elevator motor according to one of the preceding claims, wherein the brake element (18) is made from another material than the rotor body (12).

9. Elevator motor according to one of the preceding claims, wherein the connections (20) are uniformly distributed along the circumference of the rotor (10).

10. Elevator motor according to one of the preceding claims, wherein at least five, preferably between six and ten connections (20) are used for connecting the brake element (18) to the rotor body (12).

11. Elevator motor according to one of the preceding claims, wherein the connections (20) are sockets or rivets, provided parallel to the rotor axis.

12. Elevator motor according to one of the preceding claims, wherein the brake element (18) is made of a different material than the rotor body (12).

13. Elevator motor according to claim 12, wherein the rotor body (12) is made of cast iron and the brake element (18) is made of steel.

14. Elevator motor according to one of the preceding claims, wherein the connections (20) are cylindrical elements arranged parallel to the rotor axis, and wherein parts of the circumference of the socket fit into corresponding complementary recesses (24, 26) provided in the rotor body (12) as well as in the brake element (18).

15. Elevator motor according to one of the preceding claims, which elevator motor is a permanent magnet motor.
